# EUROPEAN PATENT APPLICATION

(11) **EP 4 342 696 A1**
(43) Date of publication of application: **27.03.2024**
(21) Application number: 22791542.8
(22) Date of filing: 30.03.2022
(51) Int. Cl.: B60H 1/00

(54) **VEHICLE AIR-CONDITIONING DEVICE**

(30) Priority: 19.04.2021 JP 2021070077
(71) Applicant: Valeo Japan Co., Ltd., Saitama 360-0193 (JP)
(72) Inventor: NAGANO, Hideki, Kumagaya-shi Saitama 360-0193 (JP); YOSHIZAKI, Hisayoshi, Kumagaya-shi Saitama 360-0193 (JP)
(74) Representative: Valeo Systèmes Thermiques
(86) International application number: PCT/JP2022/015875
(87) International publication number: WO 2022/224767

(57) **Abstract**

[Abstract] To simultaneously achieve a function of reducing an amount of cool air flowing from a cool air main flow passage into an air mix chamber when an air mix door is in the vicinity of a full hot position and a function of actively guiding the cool air from the cool air main flow passage to a rear outlet via the air mix chamber.

[Solution] When a cool air amount adjustment guide 20 formed to extend from an air conditioning case 2 into a cool air main flow passage 9 and configured to limit an amount of cool air flowing into an air mix chamber 11 when an air mix door 10 is in the vicinity of a full hot position, and a cool air bypass guide 30 configured to guide the cool air passing through the cool air main flow passage 9 to a rear outlet 16 while reducing mixing of the cool air with warm air passing through a warm air main flow passage 8 are provided, a part of the cool air amount adjustment guide 20 is cut out, and a cool air introduction port 31 of the cool air bypass guide 30 faces the notch 21.

## Description

### Technical Field

The present invention relates to a vehicle air-conditioning device capable of securing linearity of a temperature of conditioned air when an air mix door is displaced from a full hot position and preventing a cool defrosting phenomenon.

### Background Art

A vehicle air-conditioning device includes: an air conditioning case in which an air flow path is formed; a cooling heat exchanger disposed inside the air conditioning case and configured to cool air-conditioning air introduced into the air flow path; a heating heat exchanger configured to heat the air-conditioning air; a warm air main flow passage configured to cause the air-conditioning air to pass through the heating heat exchanger and guide the air-conditioning air downstream as warm air; a cool air main flow passage configured to cause the air-conditioning air to bypass the heating heat exchanger and guide the air-conditioning air downstream as cool air; an air mix door configured to adjust a ratio of the warm air flowing through the warm air main flow passage to the cool air flowing through the cool air main flow passage; and an air mix chamber configured to mix the cool air passing through the cool air main flow passage and the warm air passing through the warm air main flow passage to form conditioned air.

The air mix chamber is connected to a defroster outlet for blowing the air-conditioning air toward a windshield (not illustrated), a vent outlet for blowing the air-conditioning air toward a chest of an occupant, and a foot outlet for blowing the air-conditioning air toward feet of the occupant. Further, the air conditioning case is provided with a mode door that adjusts a blowing mode by adjusting a supply amount of the conditioned air for the defroster outlet, the vent outlet, and the foot outlet.

The air mix door is movable between a full hot position at which the air mix door eliminates the cool air flowing through the cool air main flow passage and allows all the air-conditioning air to pass through the warm air main flow passage and a full cool position at which the air mix door eliminates the warm air flowing through the warm air main flow passage and allows all the air-conditioning air to pass through the cool air main flow passage. In particular, at the time of a small opening degree when the air mix door is slightly displaced from the full hot position toward a full cool position side, a phenomenon occurs in which the air-conditioning air that passes through the cooling heat exchanger flows into a gap portion (a gap between the air mix door and a seat portion on which the air mix door seats when at the full hot position) having a low pressure at once, and an air amount equal to or greater than an air amount assumed at the small opening degree of the air mix door flows out from the cool air main flow passage to the air mix chamber.

Therefore, linearity of a temperature of the conditioned air in the air mix chamber (a proportional relationship of a decrease rate of the temperature of the conditioned air in the air mix chamber with respect to a movement amount of the air mix door from the full hot position) is impaired. In particular, in the defroster outlet connected to the air mix chamber close to the cool air main flow passage, a cool defrosting phenomenon occurs in which the cool air from the cool air main flow passage reaches the defroster outlet without being sufficiently mixed with the warm air in the air mix chamber and a large amount of cool air is blown out from the defroster outlet, and inconvenience such as fog on the windshield may occur.

Therefore, in order to adjust the linearity of the temperature of the conditioned air by reducing an amount of cool air supplied from the cool air main flow passage to the air mix chamber at the time of such a small opening degree, it is desirable to provide a cool air amount adjustment guide that limits an amount of cool air flowing into the air mix chamber when the air mix door is in the vicinity of the full hot position.

For example, Patent Literature 1 described below discloses an arc-shaped guide plate in which an air mix door is implemented by a cantilever door whose rotation shaft is integrally provided at an end portion of a flat plate-shaped door body, and the guide plate is disposed at a predetermined interval from a tip end portion of the air mix door along a rotation trajectory of the tip end portion of the air mix door over a predetermined rotation angle range from a full hot position of the air mix door, and it is considered that the guide plate functions as the cool air amount adjustment guide that limits an amount of cool air flowing into an air mix chamber when the air mix door is in the vicinity of the full hot position.

Therefore, by providing such a cool air amount adjustment guide, the amount of cool air flowing into the air mix chamber when the air mix door is in the vicinity of the full hot position is reduced, the linearity of the temperature of the conditioned air can be adjusted, and the cool defrosting phenomenon can be avoided.

Also, in order to obtain desired temperature performance, there is a demand for imparting a temperature difference to the conditioned air blown out from the outlets, and there is a demand for a configuration in which the cool air flowing through the cool air main flow passage is guided to the vent outlet or the like without being mixed with the warm air in the air mix chamber as much as possible.

Therefore, Patent Literature 2 described below proposes a configuration in which a cool air bypass guide (a fixed guide including a guide plate) that guides cool air flowing through a cool air main flow passage to a vent outlet (cool air outlet) while preventing mixing of the cool air with warm air is installed in an air mix chamber.

According to such a configuration, since a required amount of cool air can be actively supplied to the vent outlet without being mixed with the warm air, high temperature adjustment performance can be achieved.

### Citation List

### Patent Literature

Patent Literature 1: JPH10-114209A
Patent Literature 2: JP2009-143330A

### Summary of Invention

### Technical Problem

However, since the configuration in which the amount of cool air flowing from the cool air main flow passage into the air mix chamber is reduced at the time of a small opening degree at which the air mix door is in the vicinity of the full hot position and the configuration in which the cool air flowing from the cool air main flow passage is actively guided to the vent outlet require opposite flows of cool air, it is a problem how to simultaneously achieve these two opposite flows of cool air.

Such a problem may occur not only when the air mix door is formed of a plate door but also when the air mix door is formed of a sliding door, a rotary door, or the like.

The invention has been made in view of the above circumstances, and a main object of the invention is to provide a vehicle air-conditioning device capable of simultaneously achieving a function of reducing an amount of cool air flowing from a cool air main flow passage into an air mix chamber when an air mix door is in the vicinity of a full hot position and a function of actively guiding the cool air from the cool air main flow passage to a rear outlet without mixing the cool air with warm air as much as possible.

### Solution to Problem

In order to achieve the above object, the invention provides a vehicle air-conditioning device including:
an air conditioning case in which an air flow path is formed;
a heating heat exchanger disposed in the air conditioning case and configured to heat air-conditioning air introduced into the air flow path;
a warm air main flow passage configured to cause the air-conditioning air to pass through the heating heat exchanger and guide the air-conditioning air downstream as warm air;
a cool air main flow passage configured to cause the air-conditioning air to bypass the heating heat exchanger and guide the air-conditioning air downstream as cool air;
an air mix door configured to adjust a ratio of the warm air flowing through the warm air main flow passage to the cool air flowing through the cool air main flow passage;
an air mix chamber configured to mix the cool air passing through the cool air main flow passage and the warm air passing through the warm air main flow passage to form conditioned air;
a front outlet connected to the air mix chamber close to the cool air main flow passage;
a rear outlet connected to a forward air mix chamber on a side opposite to the cool air main flow passage;
a cool air amount adjustment guide formed to extend from the air conditioning case into the cool air main flow passage and configured to limit an amount of the cool air flowing into the air mix chamber when the air mix door is in the vicinity of a full hot position; and
a cool air bypass guide configured to take in, from a cool air introduction port, the cool air passing through the cool air main flow passage and guide the cool air to the rear outlet while reducing mixing of the cool air with the warm air from the warm air main flow passage, in which
the cool air amount adjustment guide includes a notch formed by cutting out a part of the guide, and
the cool air introduction port faces the notch.

When the cool air amount adjustment guide and the cool air bypass guide are provided, since the cool air introduction port of the cool air bypass guide faces (is opened to) the notch portion of the cool air amount adjustment guide, it is possible to implement a configuration in which opposite functions of the cool air amount adjustment guide that limits the cool air flowing into the air mix chamber and the cool air bypass guide that actively guides the cool air to the rear outlet are simultaneously achieved, linearity of a temperature of the conditioned air when the air mix door is slightly displaced from the full hot position (has a small opening degree) can be secured, and high temperature adjustment performance can be achieved while reliably preventing a cool defrosting phenomenon.

Here, the cool air bypass guide may be provided on a baffle plate provided in the air mix chamber.

That is, when the baffle plate is provided in the air mix chamber to guide the warm air from the warm air main flow passage to the front outlet while blocking mixing of the warm air with the cool air and to guide the cool air from the cool air main flow passage to the rear outlet while blocking mixing of the cool air with the warm air, the baffle plate may be used to substitute the cool air bypass guide.

Also, in the vehicle air-conditioning device in which the air flow path is partitioned into left and right paths by a partition wall, the cool air bypass guide may be provided on both sides of the partition wall.

When the cool air bypass guide is provided along a side wall of the air conditioning case, the cool air bypass guide may be provided on the side wall of the air conditioning case.

Here, the cool air bypass guide may guide the cool air to a plurality of the rear outlets.

In addition, the cool air bypass guide may be formed in a tubular shape, or may include guide plates disposed substantially in parallel in a vertical direction.

The above configuration is applicable to various air-conditioning devices, and may be adopted in a vehicle air-conditioning device in which the front outlet connected to the air mix chamber close to the cool air main flow passage may be at least one of a defroster outlet and a side vent outlet, and the rear outlet connected to the air mix chamber on the side opposite to the cool air main flow passage may be at least one of a center vent outlet and a foot outlet, and may be adopted in a vehicle air-conditioning device in which the front outlet is a defroster outlet and the rear outlet is at least one of a vent outlet and a foot outlet.

### Advantageous Effects of Invention

As described above, according to the invention, in the vehicle air-conditioning device including the cool air amount adjustment guide formed to extend from the air conditioning case into the cool air main flow passage and configured to limit the amount of cool air flowing into the air mix chamber when the air mix door is in the vicinity of the full hot position, and the cool air bypass guide configured to guide the cool air passing through the cool air main flow passage to the rear outlet while reducing mixing of the cool air with the warm air from the warm air main flow passage, a part of the cool air amount adjustment guide is cut out as a notch, and the cool air introduction port of the cool air bypass guide is opened to the notch. Therefore, it is possible to simultaneously achieve a function of reducing the amount of cool air flowing from the cool air main flow passage into the air mix chamber when the air mix door is in the vicinity of the full hot position and a function of actively guiding the cool air from the cool air main flow passage to the rear outlet via the air mix chamber, the linearity of the temperature of the conditioned air when the air mix door is slightly displaced from the full hot position (has a small opening degree) can be secured, and the high temperature adjustment performance can be achieved while reliably preventing the cool defrosting phenomenon.

### Brief Description of Drawings

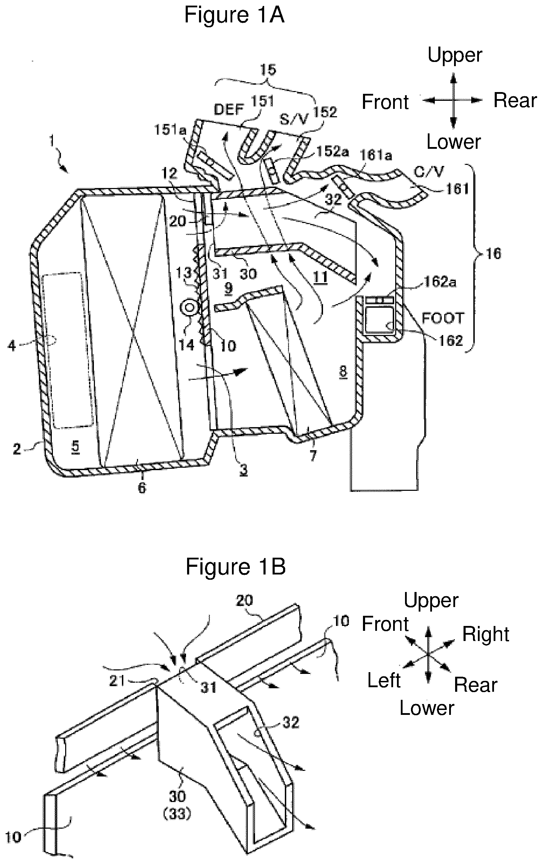

[FIG. 1] FIG. 1 illustrates views illustrating a vehicle air-conditioning device according to an embodiment of the invention, (a) of FIG. 1 is a cross-sectional view illustrating an overall configuration example, and (b) of FIG. 1 is a perspective view of an air mix door, a cool air amount adjustment guide, and a cool air bypass guide when viewed obliquely from a rear side.

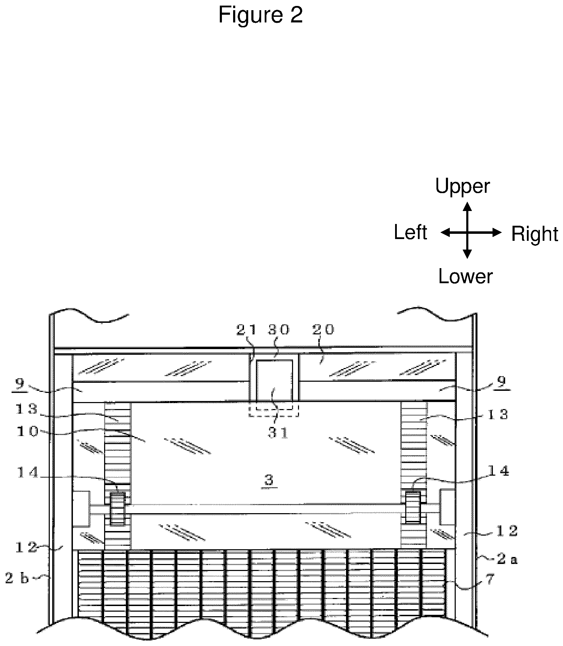

[FIG. 2] FIG. 2 illustrates an example in which the cool air bypass guide is provided substantially at a center of an air flow path, and is a view of an inside of the vehicle air-conditioning device in FIG. 1 when an air mix door side is viewed from between a cooling heat exchanger and the air mix door, and illustrates a state in which the air mix door moves to a position below the cool air amount adjustment guide.

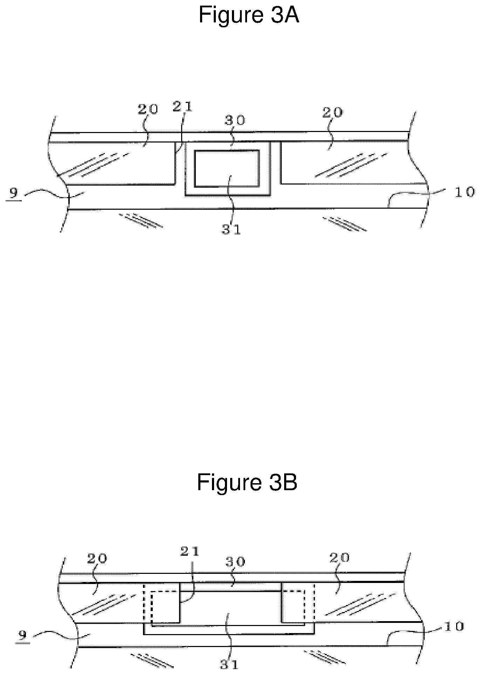

[FIG. 3] FIG. 3 illustrates views illustrating another example of a state in which a notch of the cool air amount adjustment guide and a cool air introduction port of the cool air bypass guide are opened, (a) of FIG. 3 is a view illustrating an example in which an end portion provided with the cool air introduction port of the cool air bypass guide is smaller than the notch of the cool air amount adjustment guide, and (b) of FIG. 3 is a view illustrating an example in which the end portion provided with the cool air introduction port of the cool air bypass guide is larger than the notch of the cool air amount adjustment guide.

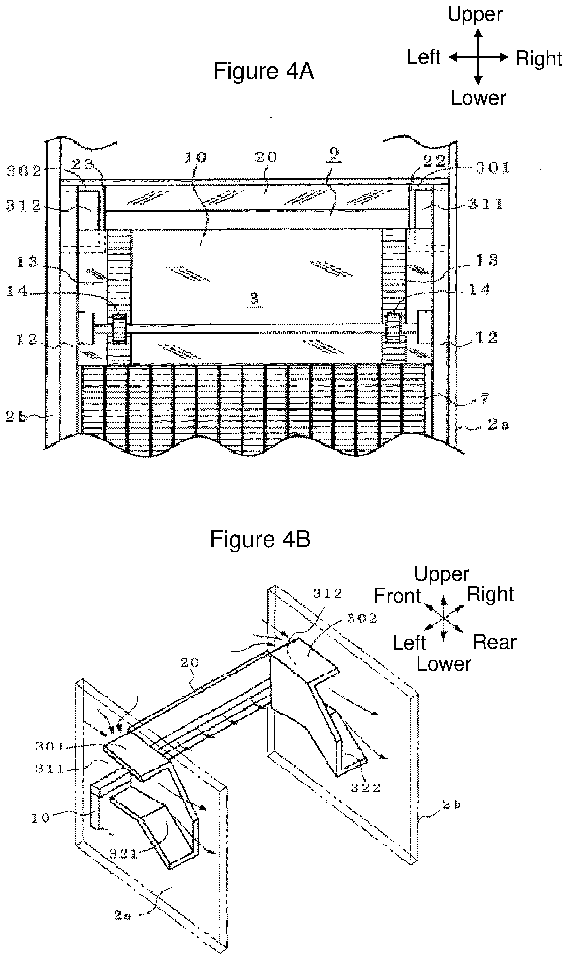

[FIG. 4] FIG. 4 illustrates views illustrating an example in which the cool air bypass guide is provided on both left and right sides of the air flow path, (a) of FIG. 4 is a view of the inside of the vehicle air-conditioning device when the air mix door side is viewed from between the cooling heat exchanger and the air mix door and is a view illustrating a state in which the air mix door moves to a position below the cool air amount adjustment guide, and (b) of FIG. 4 is a perspective view of the air mix door, the cool air amount adjustment guide, and the cool air bypass guide in (a) of FIG. 4 when viewed obliquely from the rear side.

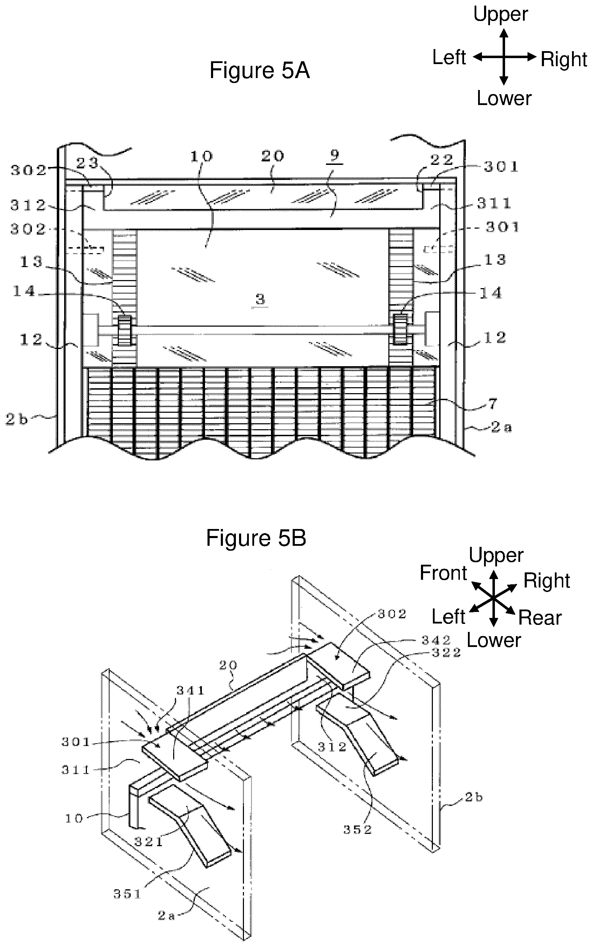

[FIG. 5] FIG. 5 illustrates views illustrating another example in which the cool air bypass guide is provided on both left and right sides of the air flow path, (a) of FIG. 5 is a view of the inside of the vehicle air-conditioning device when the air mix door side is viewed from between the cooling heat exchanger and the air mix door and is a view illustrating a state in which the air mix door moves to a position below the cool air amount adjustment guide, and (b) of FIG. 5 is a perspective view of the air mix door, the cool air amount adjustment guide, and the cool air bypass guide in (a) of FIG. 5 when viewed obliquely from the rear side.

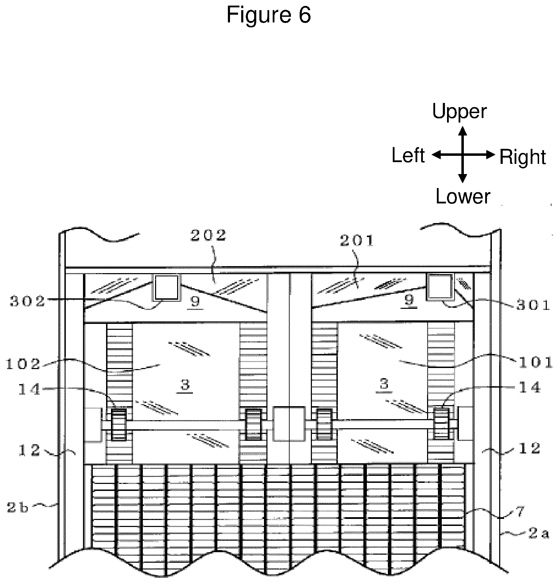

[FIG. 6] FIG. 6 illustrates an example in which sliding doors are provided side by side on the left and right sides of the air flow path and the cool air amount adjustment guide and the cool air bypass guide are provided corresponding to the sliding doors respectively, and is a view illustrating an example in which the cool air amount adjustment guide and the cool air bypass guide are asymmetrically provided on the left and right sides.

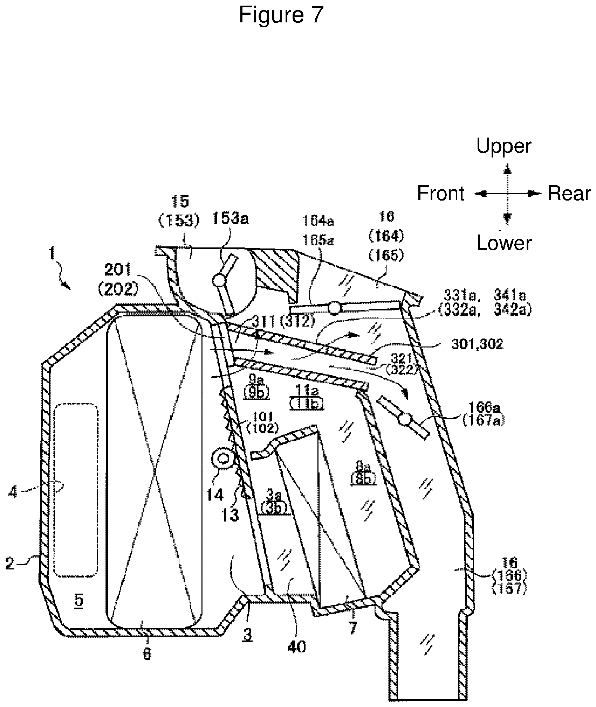

[FIG. 7] FIG. 7 is a cross-sectional view illustrating another embodiment of the vehicle air-conditioning device according to the invention, and is a cross-sectional view illustrating an example in which a downstream side of an evaporator is partitioned into left and right portions by a partition wall.

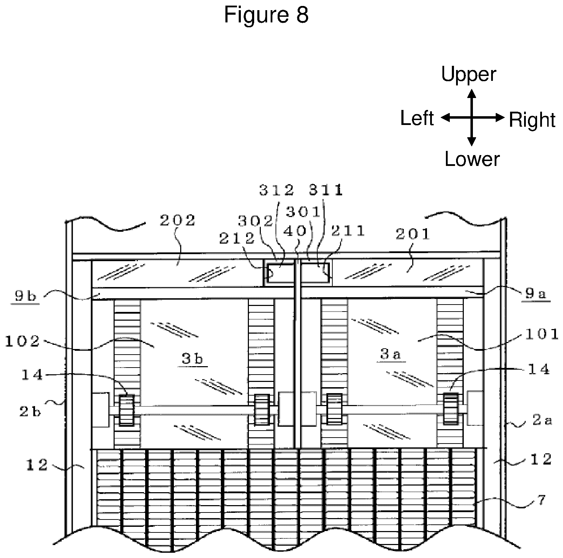

[FIG. 8] FIG. 8 illustrates an example in which the cool air bypass guide is provided on both left and right sides of the partition wall, and is a view of the inside of the vehicle air-conditioning device in FIG. 7 when the air mix door side is viewed from between the cooling heat exchanger and the air mix door, and illustrates a state in which the air mix door moves to a position below the cool air amount adjustment guide.

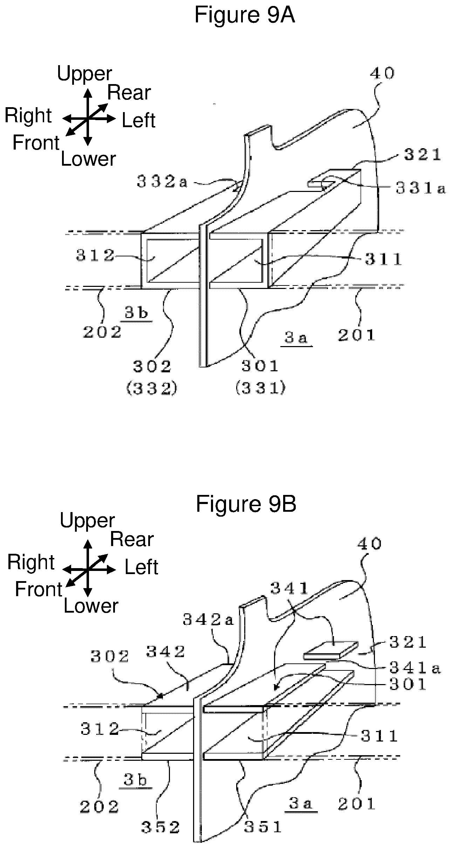

[FIG. 9] FIG. 9 illustrates perspective views illustrating configuration examples in which the cool air bypass guide is provided using the partition wall in the configuration in FIG. 8, (a) of FIG. 9 is a view illustrating an example in which the cool air bypass guide is formed in a tubular shape on both sides of the partition wall, and (b) of FIG. 9 is a view illustrating an example in which the cool air bypass guide is formed by guide plates disposed substantially in parallel in a vertical direction on both sides of the partition wall.

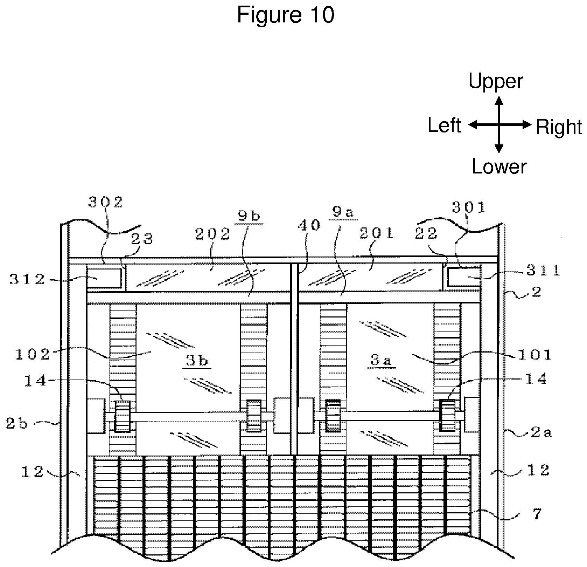

[FIG. 10] FIG. 10 is a view illustrating an example in which the cool air bypass guide is provided along left and right side walls of an air conditioning case, and is a view of the inside of the vehicle air-conditioning device when the air mix door side is viewed from between the cooling heat exchanger and the air mix door, and illustrates a state in which the air mix door moves to a position below the cool air amount adjustment guide.

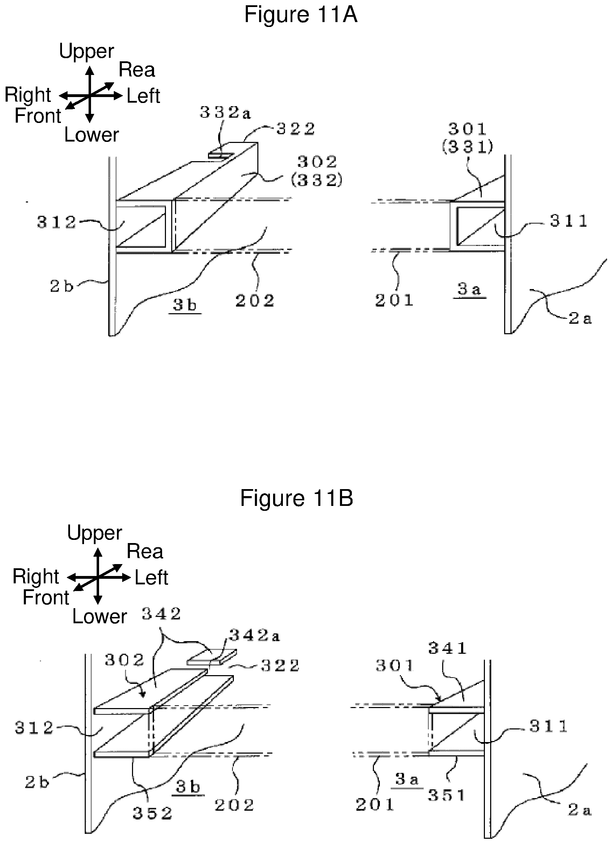

[FIG. 11] FIG. 11 illustrates perspective views illustrating configuration examples in which the cool air bypass guide is provided using the side walls of the air conditioning case in the configuration in FIG. 10, (a) is a view illustrating an example in which the cool air bypass guide is formed in a tubular shape on inner sides of the side walls, and (b) is a view illustrating an example in which the cool air bypass guide is formed by the guide plates disposed substantially in parallel in the vertical direction on the inner sides of the side walls.

### Description of Embodiments

Hereinafter, embodiments of the invention will be described with reference to the drawings.

FIG. 1 illustrates a vehicle air-conditioning device 1 mounted in the vicinity of a center console portion of a vehicle. The vehicle air-conditioning device 1 is disposed closer to a vehicle interior side than a partition plate that partitions an engine room and the vehicle interior, and outside air (air outside the vehicle interior) and/or inside air (air inside the vehicle interior) is introduced into an air conditioning case 2 via a blower unit (not illustrated).

The air conditioning case 2 forms a passage (air flow path 3) for air flowing toward the vehicle interior, is made of a synthetic resin material, and includes an air introduction space 5 for introducing air toward a most upstream side (partition plate side) via an air introduction port 4.

An evaporator 6 serving as a cooling heat exchanger is disposed downstream of the air introduction space 5 in the air conditioning case 2, and a heater core 7 serving as a heating heat exchanger is disposed downstream of the evaporator 6.

The evaporator 6 forms a part of a refrigeration cycle, and is erected in the air passage such that all air-conditioning air introduced from the air introduction port 4 passes therethrough, and cools the air passing therethrough as necessary. In addition, the heater core 7 is erected at a portion close to a lower portion of the air conditioning case 2 located downstream of the evaporator 6.

A warm air main flow passage 8 for causing the air-conditioning air to pass through the heating heat exchanger 7 and guiding the air-conditioning air downstream as warm air, and a cool air main flow passage 9 for causing the air-conditioning air to bypass the heating heat exchanger 7 and guiding the air-conditioning air downstream as cool air are provided downstream of the evaporator 6.

An air mix door 10 for adjusting a ratio of the warm air flowing through the warm air main flow passage 8 to the cool air flowing through the cool air main flow passage 9 is disposed downstream of the evaporator 6, and an air mix chamber 11 for mixing the cool air passing through the cool air main flow passage 9 and the warm air passing through the warm air main flow passage 8 to form conditioned air is provided above the heater core 7 downstream of the air mix door 10.

In this example, the air mix door 10 is implemented by a sliding door, and door guides 12 each extending vertically are provided on inner surfaces of both left and right side walls of the air conditioning case 2 so as to move vertically along an end surface of the evaporator 6 on a ventilation outlet side. The air mix door 10 is slidable along the door guides 12. Specifically, a rack 13 is formed in a vertical direction on an upstream surface of the air mix door 10, a pinion 14 that meshes with the rack 13 is provided upstream of the air mix door 10, the pinion 14 is rotated by an actuator (not illustrated), and thus the air mix door 10 can move vertically between a full hot position (a position at which the warm air main flow passage 8 is fully opened) at which the cool air main flow passage 9 is closed and a full cool position (a position at which the cool air main flow passage 9 is fully opened) at which the warm air main flow passage 8 is closed.

A front outlet 15 through which the air-conditioning air can be supplied toward window glass or the vicinity thereof is provided above the air mix chamber 11 of the air conditioning case 2 close to the cool air main flow passage 9, and a rear outlet 16 is connected to the air mix chamber 11 of the air conditioning case 2 on a side opposite to the cool air main flow passage 9.

Here, the front outlet 15 includes a defroster outlet 151 for blowing the conditioned air toward a windshield (not illustrated) and a side vent outlet 152 for blowing the conditioned air toward the vicinity of side glass, and the rear outlet 16 includes a center vent outlet 161 for blowing the conditioned air toward a chest of an occupant and a foot outlet 162 for blowing the conditioned air toward feet of the occupant.

An opening degree of the defroster outlet 151 is adjusted by a defroster door 151a, an opening degree of the side vent outlet 152 is adjusted by a side vent door 152a, an opening degree of the center vent outlet 161 is adjusted by a center vent door 161a, and an opening degree of the foot outlet 162 is adjusted by a foot door 162a.

In the vehicle air-conditioning device 1, a cool air amount adjustment guide 20 extending from the air conditioning case 2 is disposed in the cool air main flow passage 9. The cool air amount adjustment guide 20 is formed in a plate shape in this example, and extends from an upper wall of the air conditioning case 2 into the cool air main flow passage 9 substantially parallel to a movement trajectory of the air mix door 10. The cool air amount adjustment guide 20 is disposed at a predetermined interval from the movement trajectory of the air mix door so as not to interfere with a vertical movement of the air mix door 10.

The cool air amount adjustment guide 20 may be disposed upstream or downstream of the air mix door 10, and is disposed downstream of the air mix door 10 in this example. In this example, the cool air amount adjustment guide 20 is provided over a substantially entire lateral width of the air flow path 3, and a lower end edge of the cool air amount adjustment guide is substantially parallel to an upper end edge of the air mix door 10.

Therefore, the cool air amount adjustment guide 20 has a function of limiting an amount of cool air flowing into the air mix chamber 11 when the air mix door 10 is in the vicinity of the full hot position. That is, when the air mix door 10 moves downward from the full hot position located at an uppermost position, the amount of cool air flowing into the air mix chamber 11 is limited until the upper end edge of the air mix door 10 is separated from the lower end edge of the cool air amount adjustment guide 20 (the upper end edge of the air mix door 10 is located below the lower end edge of the cool air amount adjustment guide 20). Thereafter, when the upper end edge of the air mix door 10 is separated from the lower end edge of the cool air amount adjustment guide 20, a gap between the air mix door 10 and the cool air amount adjustment guide 20 increases, and a large amount of cool air starts to flow into the air mix chamber 11.

A cool air bypass guide 30 that guides the cool air flowing through the cool air main flow passage 9 to the rear outlet (the center vent outlet 161 and the foot outlet 162) while reducing mixing of the cool air with the warm air flowing through the warm air main flow passage 8 is disposed downstream of the cool air amount adjustment guide 20, that is, in the air mix chamber 11.

The cool air bypass guide 30 is fixed to the air conditioning case 2 by a support member (not illustrated) or is mounted inside the air conditioning case 2 using a fixing portion (not illustrated) integrally formed with the cool air bypass guide 30. As illustrated in (b) of FIG. 1, the cool air bypass guide 30 is also formed as a baffle plate 33 that prevents mixing of the cool air with the warm air in order to guide the cool air to the rear outlet. The cool air bypass guide 30 is formed in a tubular shape extending in a direction substantially perpendicular to the cool air amount adjustment guide 20, a cool air introduction port 31 opened to a cool air amount adjustment guide 20 side is formed on one end side of the cool air bypass guide 30, and a cool air outlet port 32 opened to the rear outlet 16 (the center vent outlet 161 and the foot outlet 162) is formed on the other end side of the cool air bypass guide 30. In this example, an upper surface on a front side of the cool air bypass guide is not opened and faces the front outlet 15 (the defroster outlet 151 and the side vent outlet 152), and the upper surface on a rear side and the other end are opened and face the rear outlet (the center vent outlet 161 and the foot outlet 162).

In this example, as illustrated in FIG. 2, a rectangular notch 21 is provided substantially in a central portion of the cool air amount adjustment guide 20, and the cool air introduction port 31 of the cool air bypass guide 30 is opened to (faces) the notch 21.

Here, the notch 21 of the cool air amount adjustment guide 20 is provided so as to divide the cool air amount adjustment guide 20 into left and right portions.

Further, an end portion of the cool air introduction port 31 of the cool air bypass guide 30 may be fitted into the notch 21 of the cool air amount adjustment guide 20, or may be in close contact with a downstream side of the notch portion 21, or may face the notch 21 with a predetermined interval.

In the embodiment illustrated in FIGS. 1 and 2, a lateral width of the notch 21 of the cool air amount adjustment guide 20 is equal to a lateral width of the end portion, at which the cool air introduction port 31 is formed, of the cool air bypass guide 30. Further, a vertical width of the end portion, at which the cool air introduction port 31 is formed, of the cool air bypass guide 30 may be equal to an extension amount of the cool air amount adjustment guide 20 (a dimension of extension downward from an upper surface of the air conditioning case 2), or the end portion of the cool air bypass guide 30 on a cool air introduction port 31 side may extend downward than the lower end edge of the cool air amount adjustment guide 20 in order to obtain a required amount of cool air to the rear outlet (an air amount with which a desired temperature adjustment characteristic can be obtained).

Therefore, according to the above configuration, when the air mix door 10 is in the vicinity of the full hot position (when the upper end edge of the air mix door 10 is located at the same position as the lower end edge of the cool air amount adjustment guide 20 or above the lower end edge), the amount of cool air flowing into the air mix chamber 11 is limited by the cool air amount adjustment guide 20, and since the cool air flows into the air mix chamber 11 only via a narrow gap (predetermined gap) between the air mix door 10 and the cool air amount adjustment guide 20, the cool air does not flow into the air mix chamber 11 at once, and a temperature change amount of the conditioned air with respect to a movement amount of the air mix door from the full hot position can be adjusted (linearity of a temperature change of the conditioned air can be secured).

Since the amount of cool air flowing into the air mix chamber is limited until the upper end edge of the air mix door 10 is separated from the lower end edge of the cool air amount adjustment guide 20, by opening the cool air bypass guide 30 to the notch 21 of the cool air amount adjustment guide 20, an inflow pressure of the cool air upstream of the air mix door 10 into the cool air bypass guide 30 is increased, and the cool air flows intensively to the cool air bypass guide 30 and is guided to the rear outlet 16.

Thereafter, when the upper end edge of the air mix door 10 is separated from the lower end edge of the cool air amount adjustment guide 20, a large amount of cool air upstream of the air mix door 10 starts to flow toward the air mix chamber 11 from the gap between the air mix door 10 and the cool air amount adjustment guide 20, but since an opening degree of the air mix door 10 is in an increased state to some extent from the full hot position, the amount of cool air can be set to an amount of cool air corresponding to the opening degree of the air mix door 10 even though the cool air flows into the air mix chamber 11, and the linearity of a temperature of the conditioned air is not impaired.

In this state, the cool air also continues to be supplied to the rear outlet via the cool air bypass guide 30. As a result, the amount of cool air guided to the air mix chamber 11 does not become excessively large, and a cool defrosting phenomenon can be avoided.

In the embodiment illustrated in FIGS. 1 and 2, the lateral width of the notch 21 of the cool air amount adjustment guide 20 is equal to the lateral width of the end portion, at which the cool air introduction port 31 is formed, of the cool air bypass guide 30, but the lateral width of the end portion on the cool air introduction port 31 side may be smaller than the lateral width of the notch 21 of the cool air amount adjustment guide 20, as illustrated in (a) of FIG. 3, or may be larger than the lateral width of the notch 21 of the cool air amount adjustment guide 20, as illustrated in (b) of FIG. 3.

From a viewpoint of adjusting the temperature change amount of the conditioned air with respect to the movement amount of the air mix door 10 from the full hot position, it is preferable that the lateral width of the end portion at which the cool air introduction port 31 is provided is formed smaller than the lateral width of the notch 21 of the cool air amount adjustment guide 20.

In the above configuration, an example is described in which the notch 21 of the cool air amount adjustment guide 20 is provided substantially at the center of the air flow path 3 in a left-right direction, and the cool air introduction port 31 of the cool air bypass guide 30 is opened to the notch 21, but as illustrated in (a) of FIG. 4, notches 22 and 23 may be provided in both left and right end portions of the cool air amount adjustment guide 20, and cool air introduction ports 311 and 312 of cool air bypass guides 301 and 302 may be opened to the notches 22 and 23 at both ends, respectively.

In this case, the cool air bypass guides 301 and 302 may be configured such that the baffle plate as illustrated in (b) of FIG. 1 is provided on both left and right sides of the air mix chamber 11, or may be configured such that cool air bypass passages are formed by fixing the cool air bypass guides 301 and 302 each having one side surface removed from the baffle plate illustrated in (b) of FIG. 1 to side walls 2a and 2b of the air conditioning case 2, as illustrated in (b) of FIG. 4. Cool air outlet ports 321 and 322 are opened to face the rear outlet 16 as in FIG. 1.

As illustrated in FIG. 5, guide plates 341, 342, 351, and 352 disposed in the vertical direction may be provided on the side walls 2a and 2b of the air conditioning case 2 so as to extend from the side walls 2a and 2b, and the cool air bypass guides 301 and 302 each opened toward the center of the air flow path 3 in the left-right direction may be formed. Here, the guide plates 341, 351, 342, and 352 may be implemented by separate members fixed to the side walls 2a and 2b, or may be implemented by ribs formed integrally with the side walls 2a and 2b.

In the above configuration, an example in which one air mix door is provided in the air flow path 3 is described, but the same configuration can be adopted, for example, when air mix doors 101 and 102 are provided side by side on left and right of the air flow path 3. As illustrated in FIG. 6, when the air mix doors 101 and 102 are provided side by side, cool air amount adjustment guides 201 and 202 and the cool air bypass guides 301 and 302 may be respectively provided for the air mix doors 101 and 102.

In such a configuration, when an air flow is biased between a right side and a left side of the air flow path 3, the cool air amount adjustment guides 201 and 202 and the cool air bypass guides 301 and 302 may be provided asymmetrically according to the bias of the air flow.

In addition, each of the cool air amount adjustment guides 20, 201, and 202 may have an extension amount toward the cool air main flow passage 9 that changes in the left-right direction instead of having a constant extension amount, and the same also applies to the examples described above.

FIGS. 7 and 8 illustrate other configuration examples of the vehicle air-conditioning device 1. In this example, a portion of the air conditioning case 2 downstream of the evaporator 6 is partitioned into left and right air flow paths 3a and 3b by a partition wall 40, and temperature control can be independently performed on the left and right sides by the air mix doors 101 and 102 provided on the left and right sides.

In this example, the front outlet 15 including a defroster outlet 153 in communication with the right air flow path 3b and for blowing the air-conditioning air toward the windshield (not illustrated) is provided above air mix chambers 11a and 11b of the air flow paths 3a and 3b close to the cool air main flow passage 9, and the rear outlet 16 including left and right vent outlets 164 and 165 for blowing the air-conditioning air toward the chest of the occupant and left and right foot outlets 166 and 167 for blowing the air-conditioning air toward the feet of the occupant is provided on a side opposite to cool air main flow passages 9a and 9b of the air mix chambers 11a and 11b of the air conditioning case 2.

An opening degree of the defroster outlet 153 is adjusted by a defroster door 153a, opening degrees of the vent outlets 164 and 165 are adjusted by vent doors 164a and 165a, and opening degrees of the foot outlets 166 and 167 are adjusted by foot doors 166a and 167a.

In such a vehicle air-conditioning device, in order to provide the same function as that in FIG. 1, warm air main flow passages 8a and 8b, the cool air main flow passages 9a and 9b, and the air mix chambers 11a and 11b for mixing the warm air passing through the warm air main flow passages 8a and 8b and the cool air passing through the cool air main flow passages 9a and 9b to form the conditioned air are provided on respective sides with the partition wall 40 as a boundary, and the cool air amount adjustment guides 201 and 202 and the cool air bypass guides 301 and 302 are provided on the respective sides.

The cool air amount adjustment guides 201 and 202 are provided in the cool air main flow passages 9a and 9b of the left and right air flow paths 3a and 3b partitioned by the partition wall 40 so as to extend from the air conditioning case 2, and have a function of limiting the amount of cool air flowing into the air mix chambers 11a and 11b when the air mix doors 101 and 102 are in the vicinity of the full hot position.

These cool air amount adjustment guides 201 and 202 are formed in, for example, a plate shape, and may be disposed upstream or downstream of the air mix door 10, and are disposed downstream of the air mix door 10 in this example. In addition, in this example, the cool air amount adjustment guides 201 and 202 are respectively provided over substantially entire lateral widths of the air flow paths 3a and 3b between the partition wall 40 and the side walls 2a and 2b of the air conditioning case 2, and have a substantially uniform extension amount from the air conditioning case 2 (lower end edges of the cool air amount adjustment guides 201 and 202 are substantially parallel to upper end edges of the air mix doors 101 and 102).

Further, the cool air bypass guides 301 and 302 may be provided using the baffle plate as illustrated in (b) of FIG. 1, and may be provided using the partition wall 40 such that notches 211 and 212 are provided between the cool air amount adjustment guides 201 and 202 and the partition wall 40 and the cool air introduction ports 311 and 312 face the notches 211 and 212, as illustrated in (a) of FIG. 8.

That is, as illustrated in (a) of FIG. 9, the cool air bypass guides 301 and 302 may be formed in a tubular shape on both sides of the partition wall 40 by fixing open sides of duct forming members 331 and 332 each having a U-shaped cross section to the partition wall 40 on both sides of the partition wall 40.

Further, as illustrated in (b) of FIG. 9, the guide plates 341, 351, 342, and 352 disposed substantially parallel to each other in the vertical direction may be provided on both side surfaces of the partition wall 40 so as to extend from the partition wall 40, thereby forming the cool air bypass guides 301 and 302 with air mix chamber sides opened toward the air flow paths 3a and 3b. The guide plates 341, 351, 342, and 352 may be implemented by separate members fixed to the partition wall 40, or may be implemented by ribs formed integrally with the partition wall 40.

In the cool air bypass guides 301 and 302, the cool air outlet ports 321 and 322 face the foot outlets 166 and 167, and openings 331a and 332a or notches 341a and 342a are provided in upper surface portions of the cool air bypass guides 301 and 302 to face the vent outlets 164 and 165, and the cool air can be easily guided to the rear outlet 16 (the vent outlets 164 and 165 and the foot outlets 166 and 167).

In addition, as an embodiment in which the cool air amount adjustment guides 201 and 202 and the cool air bypass guides 301 and 302 are provided in the air flow paths 3a and 3b respectively with the partition wall 40 as a boundary, as illustrated in FIG. 10, the cool air bypass guides 301 and 302 may be provided using the side walls 2a and 2b of the air conditioning case 2 such that the notches 22 and 23 are provided in end portions of the cool air amount adjustment guides 201 and 202 on the side walls 2a and 2b sides of the air conditioning case, and the cool air introduction ports 311 and 312 face the notches 22 and 23.

That is, as illustrated in (a) of FIG. 11, the cool air bypass guides 301 and 302 may be formed in a tubular shape on the left and right side walls 2a and 2b of the air conditioning case 2 by fixing the open sides of the duct forming members 331 and 332 each having a U-shaped cross section to the side walls 2a and 2b of the air conditioning case 2. Further, as illustrated in (b) of FIG. 11, the guide plates 341, 351, 342, and 352 disposed substantially parallel to each other in the vertical direction may be provided on the side walls 2a and 2b of the air conditioning case 2 so as to be perpendicular to the side walls, thereby forming the cool air bypass guides 301 and 302 with the air mix chamber sides opened. The guide plates 341, 351, 342, and 352 may be implemented by separate members fixed to the side walls 2a and 2b, or may be implemented by ribs formed integrally with the side walls 2a and 2b.

In such a configuration, the cool air can be actively supplied to the rear outlet via the cool air bypass guides 301 and 302 while limiting the amount of cool air blown to the air mix chamber in a state in which the air mix doors 101 and 102 are slightly displaced from the full hot position in the left and right air flow paths 3a and 3b (while adjusting the temperature change amount of the conditioned air with respect to the movement amount of the air mix doors from the full hot position), the linearity of the temperature change of the conditioned air can be secured, a state in which the cool air is excessively supplied to the front outlet can be avoided, and high temperature adjustment performance can be achieved.

In the above example, the sliding door is used as the air mix door, but the same configuration can be adopted when the air mix door is a cantilever door in which a rotation shaft is integrally provided at an end portion of a flat plate-shaped door body, a butterfly-type door in which a rotation shaft is integrally provided at the center of a flat plate-shaped door body, or a rotary door.

In the example described above, the cool air outlet port 32 of the cool air bypass guide 30 is opened toward both the center vent outlet 161 and the foot outlet 162, but the invention is not limited thereto. For example, the cool air outlet port 32 may be opened toward the side vent outlet 152 and the center vent outlet 161, and may not be opened toward the foot outlet. In general, when the vehicle air-conditioning device 1 is in a bi-level mode (a mode in which the conditioned air is blown out from the side vent outlet 152, the center vent outlet 161, and the foot outlet 162), a temperature of conditioned air blown out from the foot outlet 162 is required to be higher than temperatures of conditioned air blown out from other outlets 152 and 161, and the requirement can be met by not supplying the cool air guided through the cool air bypass guide 30 to the foot outlet 162.

### Reference Signs List

1 vehicle air-conditioning device
2 air conditioning case
2a, 2b side wall
3, 3a, 3b air flow path
6 cooling heat exchanger (evaporator)
7 heating heat exchanger (heater core)
8 warm air main flow passage
9 cool air main flow passage
10 air mix door
11 air mix chamber
15 front outlet
16 rear outlet
20, 201, 202 cool air amount adjustment guide
30, 301, 302 cool air bypass guide
31, 311, 312 cool air introduction port
33 baffle plate
40 partition wall
151, 153 defroster outlet
152 side vent outlet
161 center vent outlet
162, 166, 167 foot outlet
164, 165 vent outlet
331, 332 duct forming member
341, 342, 351, 352 guide plate

## Claims

1. A vehicle air-conditioning device comprising:
an air conditioning case 2 in which an air flow path 3 is formed;
a heating heat exchanger 7 disposed in the air conditioning case 2 and configured to heat air-conditioning air introduced into the air flow path 3;
a warm air main flow passage 8 configured to cause the air-conditioning air to pass through the heating heat exchanger 7 and guide the air-conditioning air downstream as warm air;
a cool air main flow passage 9 configured to cause the air-conditioning air to bypass the heating heat exchanger 8 and guide the air-conditioning air downstream as cool air;
an air mix door 10 configured to adjust a ratio of the warm air flowing through the warm air main flow passage 8 to the cool air flowing through the cool air main flow passage 9;
an air mix chamber 11 configured to mix the cool air passing through the cool air main flow passage 9 and the warm air passing through the warm air main flow passage 8 to form conditioned air;
a front outlet 15 connected to the air mix chamber 11 close to the cool air main flow passage 9;
a rear outlet 16 connected to a forward air mix chamber 11 on a side opposite to the cool air main flow passage 9;
a cool air amount adjustment guide 20 formed to extend from the air conditioning case 2 into the cool air main flow passage 9 and configured to limit an amount of the cool air flowing into the air mix chamber 11 when the air mix door 10 is in the vicinity of a full hot position; and
a cool air bypass guide 30 configured to take in, from a cool air introduction port 31, the cool air passing through the cool air main flow passage 9 and guide the cool air to the rear outlet 16 while reducing mixing of the cool air with the warm air flowing through the warm air main flow passage 8, wherein
the cool air amount adjustment guide 20 includes a notch 21 formed by cutting out a part of the guide 20, and
the cool air introduction port 31 faces the notch 21.

2. The vehicle air-conditioning device according to claim 1, wherein the cool air bypass guide 30 is provided on a baffle plate 33 provided in the air mix chamber 11.

3. The vehicle air-conditioning device according to claim 1, wherein the cool air bypass guide 30 is provided on both sides of a partition wall 40 that partitions the air flow path 3 into left and right paths.

4. The vehicle air-conditioning device according to claim 1, wherein the cool air bypass guide 30 is provided on a side wall 2a and 2b of the air conditioning case 2.

5. The vehicle air-conditioning device according to any one of claims 1 to 4, wherein the cool air bypass guide 30 guides the cool air to a plurality of the rear outlets 16.

6. The vehicle air-conditioning device according to any one of claims 1 to 5, wherein the cool air bypass guide 30 is formed in a tubular shape.

7. The vehicle air-conditioning device according to any one of claims 1 to 5, wherein the cool air bypass guide 30 includes guide plates 341, 342, 351, and 352 disposed substantially parallel to each other in a vertical direction.

8. The vehicle air-conditioning device according to any one of claims 1 to 7, wherein the front outlet 15 is at least one of a defroster outlet 151 and a side vent outlet 152, and the rear outlet 16 is at least one of a center vent outlet 161 and a foot outlet 162.

9. The vehicle air-conditioning device according to any one of claims 1 to 7, wherein the front outlet 15 is a defroster outlet 153, and the rear outlet 16 is at least one of a vent outlet 164 and 165 and a foot outlet 166 and 167.
